# EUROPEAN PATENT SPECIFICATION

(11) **EP 1 708 471 B1**
(45) Date of publication and mention of the grant of the patent: **01.09.2010**
(21) Application number: 06110680.3
(22) Date of filing: 03.03.2006
(51) Int. Cl.: H04M 3/56, H04M 7/00

(54) **System and method for audio multicast**
System und Verfahren zum Audio Multicast
Système et procédé de multidiffusion audio

(30) Priority: 29.03.2005 US 93339
(43) Date of publication of application: 04.10.2006
(73) Proprietor: Inter-Tel, Inc., Tempe, Arizona 85281 (US)
(72) Inventor: Chua, Teck-Kuen, Tempe, AZ 85281 (US)
(74) Representative: Curley, Donnacha John

(56) References cited:
- US-B1- 6 320 958
- US-B1- 6 327 276

## Description

### Field of Invention

The present invention relates generally to systems and methods for audio multicast and particularly, for audio multicast in a multi-party teleconference.

### Background of the Invention

In an N-party peer-to-peer teleconferencing implementation, each participating device transmits unicast audio to all the other conference devices, i.e., N-1 unicast transmissions. The receiving device mixes all the unicast audio streams and plays back the mixed audio. An annoying effect called echo can occur if the participating device receives its own audio signal. To avoid this, the peer-to-peer devices transmit their own audio but do not receive self-generated audio. Endpoint devices are typically embedded systems with limited processing resources and cannot handle a large number of incoming audio streams simultaneously. This limitation is acceptable for very small conferences; however, as more peers are added to the conference, the endpoint is unable to process all the audio streams. Thus, in the peer-to-peer situation, teleconferencing is available for only a small number of conference devices.

US 6,320,958 B1 discloses a remote conference system based on a client server model, each of the conference terminals comprises a terminal packet memory for storing voice data of the conference terminal. Synthesized voice data is multicasted to the conference terminals, each of the conference terminals searches its own voice data included in the synthesized voice data from the terminal packet memory. An echo canceller in each of the conference terminals cancels the own voice data from the synthesized voice date, thereby performing an echo cancelling processing.

Multicast standards, such as RFC 3550, discuss a modified peer-to-peer teleconferencing that utilizes IP multicast to reduce system bandwidth utilization. For instance, instead of establishing a unicast link with each of the conference devices, the participating device sends only one multicast transmission to deliver its audio to all other conference devices. This technique avoids the audio echo problems because the participating devices do not receive their own self-generated audio. However, the participating endpoint is required to process and decode each of the incoming audio streams and therefore, this technique has the same limitation on conference size as the unmodified peer-to-peer unicast approach.

Thus, a system and method is needed for audio multi-party teleconferencing which permits small or large scale conferences. Additionally, a bandwidth efficient multicast system is desirable. Accordingly, the present inventions provides generally for methods and systems substantially in accordance with the claims which follow. In one embodiment, the invention provides for a method for processing audio conferencing between a plurality of endpoints communicating over a packet network. The method comprises at a server; receiving a plurality of endpoint audio packets from one or more participating endpoints, each endpoint audio packet comprising an endpoint identifier and an encoded digital audio; mixing the digital audio from all the received endpoint audio packets to create a mixed audio stream; generating a composite audio packet, each composite audio packet comprising some or all of the mixed audio stream and the endpoint identifier associated with the digital audio in the mixed audio stream; and sending the composite audio packet in a multicast manner to all endpoints irregardless of receipt of audio packets from a particular endpoint. At an individual endpoint, the method comprises receiving the composite audio packet from the server; determining if the mixed audio stream comprises digital audio self-generated by the individual endpoint; and
removing the self-generated digital audio from the mixed audio stream.

### Brief Description of the Drawings

These and other features, aspects, and advantages of the present invention may be best understood by reference to the following description taken in conjunction with the accompanying drawings, wherein like reference numerals indicate similar elements:
Figure 1 illustrates an exemplary system for audio multicast;
Figure 2 illustrates an exemplary server system in accordance with the various embodiments of an audio multicast system;
Figure 3 illustrates an exemplary endpoint system in accordance with the various embodiments of an audio multicast system; and
Figures 4A and 4B illustrate exemplary audio packets in accordance with the various embodiments of an audio multicast system.

### Detailed Description

The present invention provides an improved, bandwidth-conserving, system and method for audio multicast in a multi-party teleconference. The present disclosure is particularly useful for a multimedia teleconferencing system capable of processing both audio and video information; however, the systems and methods disclosed are proposed for only the audio portion of the conference. In general, an audio multicast system according to the various embodiments can support small scale or large scale conferences having a flexible number of active and passive endpoint devices communicating with a teleconference server. The server receives unicast packets having audio information from each of the participating endpoints and mixes the audio to create a multicast stream transmission. The multicast is sent back to all the associated endpoints, irregardless of participation in the conference. The endpoint devices receive the multicast packets and determine if the received stream contains any information that was self-generated as an active participant. In other words, the endpoint determines if the received mixed audio includes audio that was contributed from the endpoint. The endpoint isolates its own audio contribution and removes that portion from the multicast stream. In this manner, although the multicast may include audio information from the receiving endpoint, the endpoint plays only the mixed audio from the other participants and none of the audio originating from itself.

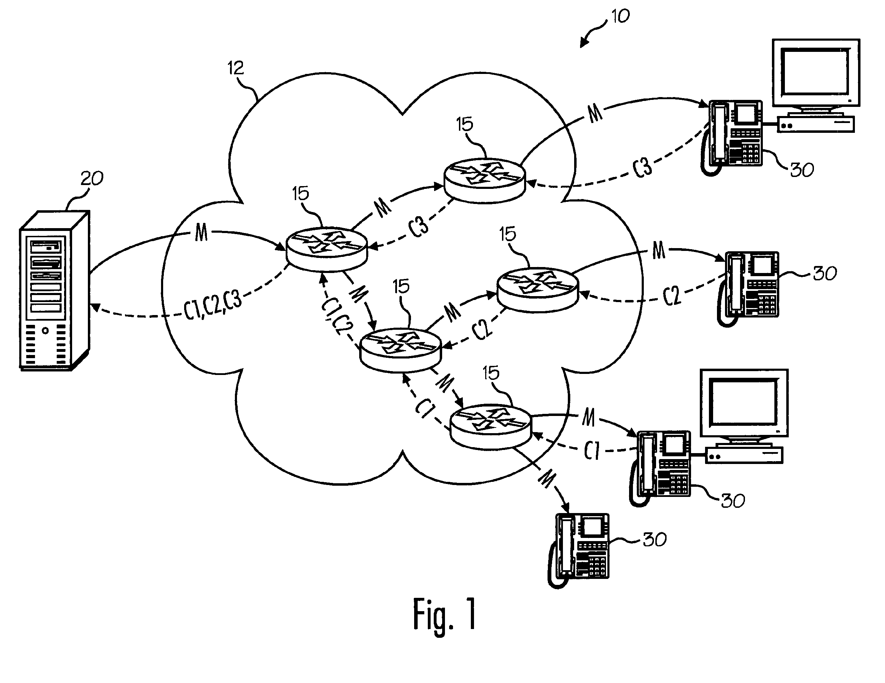

Figure 1 illustrates an exemplary audio multicast system 10 in accordance with the various embodiments. System 10 generally includes a plurality of endpoint devices 30 in communication with a server 20 via a packet network 12. Endpoint device 30 may include a telephone (stationary and portable), keyset, personal computer, computing device, personal digital assistant, pager, wireless remote client, messaging device, and any other communication device capable of transmitting and receiving communications such as during a teleconference. In the particular embodiment depicted in Figure 1, endpoints 30 include desktop keysets as well as keysets coupled to personal computing devices. It should be appreciated that the architecture illustrated in Figure 1 is only one example of suitable endpoints and not intended to be limiting in any manner. In particular embodiments, some or all of the endpoints may include a processor, memory, network interface, user I/O and power conversion, as needed, to establish the device as an operational unit or other real-time communicating device connected to packet network 12. Additionally, endpoint 30 includes particular hardware and/or software for determining if a multicast stream contains audio that was self-generated and for removing the self-generated audio from the stream prior to play-back. These particular elements and features will be described in more detail below.

Server 20 may include one or more computing servers connected to the network backbone to provide teleconferencing services. Server 20 may include hardware and/or software for performing the various functions of receiving and transmitting audio packet streams within system 10. The particular features and functions of server 20 will be described in more detail below.

Packet network 12 includes any suitable networking system capable of routing digital packets between endpoints 30 and server 20. In this particular embodiment, a plurality of data routers 15 are utilized for processing both multicast and unicast data exchanges. Data routers 15 and their functionality are well known in the telecom industry and may comprise both hardware and software components to perform packet routing. There may be various other elements present in network 12 that are not depicted on Figure 1 or described herein but are well understood in the industry as common actions within a communications system.

Used herein, "participating" or "participating device" refers to an endpoint that is actively participating in the conference by sending an audio stream. This contrasts with a passive or non-participating device that is merely listening to the conference. At any point in time, an endpoint can change its status by sending an audio stream or by stopping the transmission, such as when the endpoint user is done speaking. In the current example of Figure 1, there are four endpoints 30 in the conference. Of the four, only three of the endpoints are actively participating in the conference, i.e., transmitting an audio stream to server 20. Thus, there are currently three "active" endpoints and one "passive" endpoint. Of course, this number can change at any time and they could all be active. Moreover, it should be appreciated that while four endpoints are depicted, this is not intended to be limiting in any manner. The systems and methods of audio multicast are useful for any number of endpoints (active or passive) and are limited only by the bandwidth restrictions of the network and the processing capacity of server 20.

In a low cost implementation of the system and method for audio multicast, only some of the conferencing endpoints are eligible to actively participate and the remaining endpoints are passive. In this particular environment, the passive endpoints may not be equipped with the hardware and/or software necessary to actively participate in the conference but are merely listening to the conference and receiving a multicast from the server. The active endpoints are able to participate by sending audio data to the server and receive the multicast from the server.

In the various embodiments of a system and method for audio multicast, server 20 receives the unicast audio stream from each participating endpoint. In the exemplary system 10, server 20 receives audio streams from three participating endpoints 30. The endpoints send audio packets in a unicast manner which are routed within network 12 to server 20. The three audio streams are shown as "C1" " C2" and "C3" which are received at server 20. Server 20 generates only one mixed output audio from the three audio streams, which is shown on Figure 1 as audio stream "M". A single transmission is multicast from server 20 to all the endpoints on the conference regardless of their status of participation.

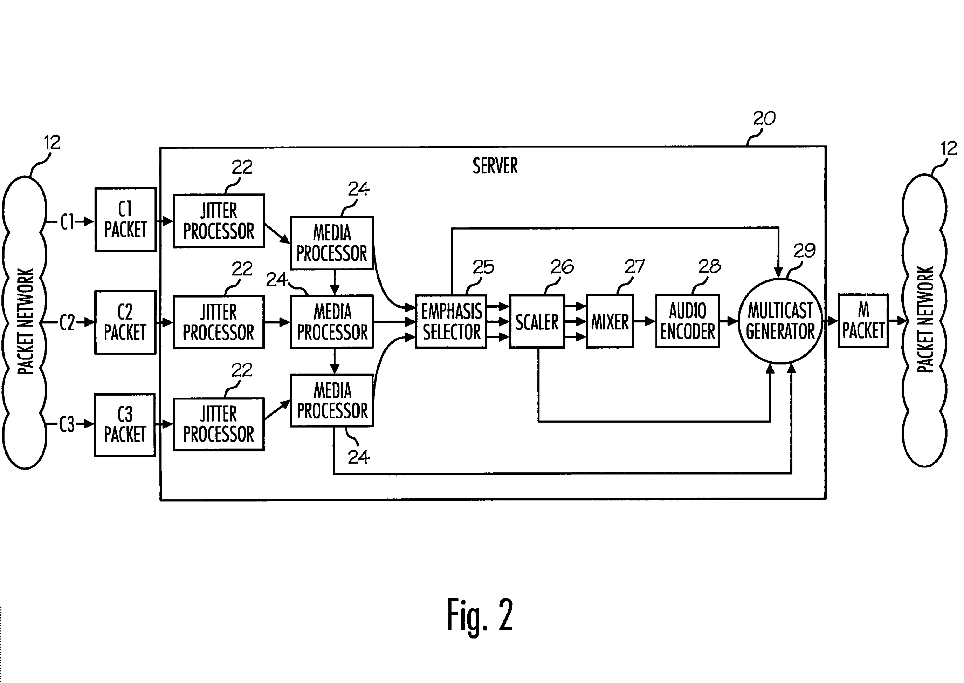

Figure 2 illustrates an exemplary server system 20 in accordance with the various embodiments of an audio multicast system. In general, server system 20 includes processing elements configured as jitter processor 22, media processor 24, emphasis selector 25, scaler 26, mixer 27, audio encoder 28, and multicast generator 29. Server 20 receives the audio input packets from the participating endpoints via packet network 12. In our example, three endpoints are currently participating in the conference and thus server 20 receives packets from three endpoints, i.e., C1, C2, C3. Jitter processor 22 includes jitter handling techniques applied to the data from each participant. Jitter processing is used, for example, to compensate for variable network delays.

Media processor 24 applies appropriate algorithms to decode and convert each packet to a linear digital format, e.g., 16-bit. The decoding is quite flexible and is able to decode encrypted packets as well as a wide variety of standard audio encoding formats. As will be described in more detail below, each packet includes tag information, media information and encoded audio. This information, in part, remains with the packet and will be used by the server to keep track of the origin of data for each conferee. Server 20 will use the data to accurately associate the packets that are being processed with the multicast output to be generated by multicast generator 29.

In packet networks, it is inevitable that audio packets will arrive late due to large network delays or disappear altogether. In either situation, the audio data is deemed lost and certain packet loss concealment (PLC) techniques may be used to synthesize the lost audio. The endpoint is provided information on what PLC technique was used at server 20 so the endpoint can synthesize the same audio data used in the mixing process.

Separate data streams each representing the active participants are processed by emphasis selector 25 to add audio power to the stream that appears to be the strongest. In one particular embodiment, emphasis selector 25 uses the comparative acoustic energy of the streams as an indicator of which stream is the strongest. The emphasis selector may continue to increase the gain for the most active channel and decrease the gain for the other channels until a predetermined maximum skew value is reached. The settings may change as soon as more energy is detected at one of the other channels. The level of emphasis to the channels is used later at the endpoints during processing, thus this information is retained for transmission by multicast generator 29.

Next the signals are scaled 26 in preparation for mixing 27. Because mixing often introduces the possibility of data overflow, scaler 26 is used to prevent overflow or clipping. Overflow is generally a mixer output error where the result exceeds the most-positive or most-negative value so that the system cannot represent the signal correctly. Scaler 26 may function as a compressor/expander to increase the clarity of the mixed output. The scaling adjustment is retained for transmission by multicast generator 29 and will used during signal processing at the endpoints. Audio encoder 28 receives the mixed signal and applies a preselected audio encoding and/or encryption algorithm to the signal that is to be multicast. Multicast generator 29 prepares the signal for packet transmission on packet network 12. The encoded mixer output combined with the data regarding the participant identities, the tag that identifies each audio segment, emphasis factors, and other processing factors is applied for each channel and transmitted out to all the endpoints via network 12 in a multicast stream.

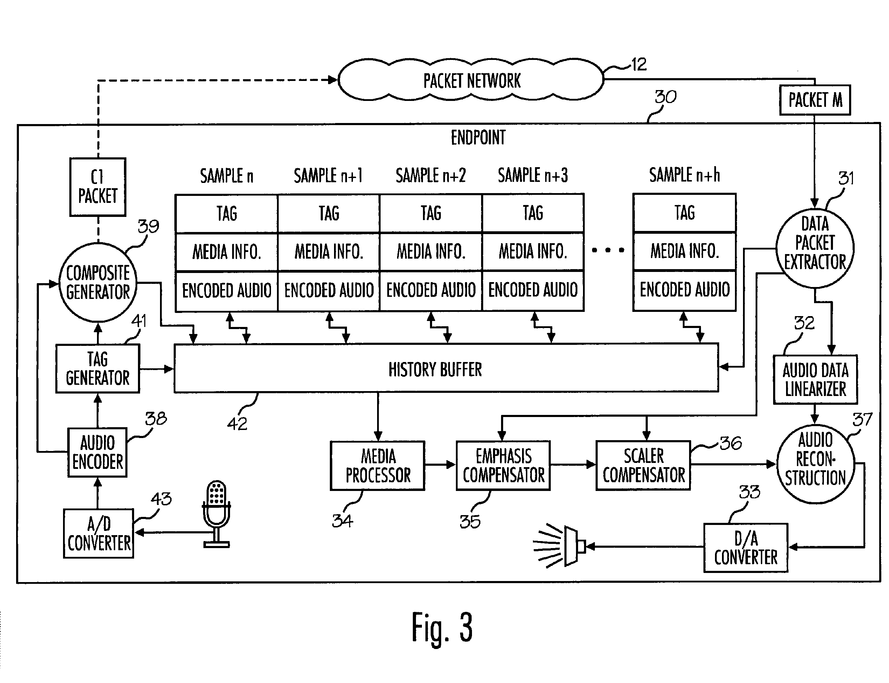

Figure 3 illustrates an exemplary endpoint system 30 in accordance with the various embodiments of an audio multicast system. Endpoint system 30 includes features for encoding audio information for unicast transmission to server 20, as well as features for processing multicast transmissions received from server 20 in preparation for endpoint playback. For discussion purposes it is assumed that

Figure 3 is an exemplary block diagram of a participating endpoint 30. In other words, endpoint 30 is actively participating in a current conference and therefore packets of audio information are generated by the endpoint for transmission to server 20. However, it should be realized that regardless of the level of participation (active or passive), each endpoint is preferably equipped with the described features. In general, endpoint system 30 includes data packet extractor 31, audio data linearizer 32, D/A converter 33, A/D converter 43, media processor 34, emphasis compensator 35, scaler compensator 36, audio reconstruction 37, audio encoder 38, tag generator 41, history buffer 42, and composite generator 39.

Encoding audio information in preparation for unicast transmission generally begins with an audio signal from a microphone, such as when the user is talking into the endpoint device. A/D converter 43 converts the analog speech to a digital signal as bytes of data. Audio encoder 38 applies an encoding and/or encryption algorithm to the audio data. Preferably, the encoding scheme is extremely flexible and capable of changing to another scheme if needed to accommodate the network conditions, user selection, etc. The encoding scheme may change during the course of a conference and any changes are preferably transmitted to the server. Additionally, a record of the encoding scheme used at the endpoint may be retained in the history buffer for future use by the endpoint. The encoding scheme may be used by server 20 in the decoding of the packets and thus will be included in the packet generated by composite generator 39. The encoding scheme may also be used to encrypt the information with a key that is transmitted along with the corresponding media-type data byte. It should be appreciated that A/D converter 43 and audio encoder 38 maybe combined to a single hardware/software or may include a hardware or software stand-alone product. Tag generator 41 assigns a unique identifier, e.g., packet tag, to each data packet before leaving endpoint 30. The tag will be used by both server 20 and the issuing endpoint 30 to facilitate correct processing of the audio data. In one particular embodiment, the tag is a combination of the endpoint device code and a timestamp code.

Composite generator 39 compiles the data packets and readies each packet for transmission on packet network 12. As will be discussed in more detail below, prior to transmission a representation of each packet is stored in history buffer 42 for later use. In this particular embodiment, C1 packets are transmitted from endpoint 30.

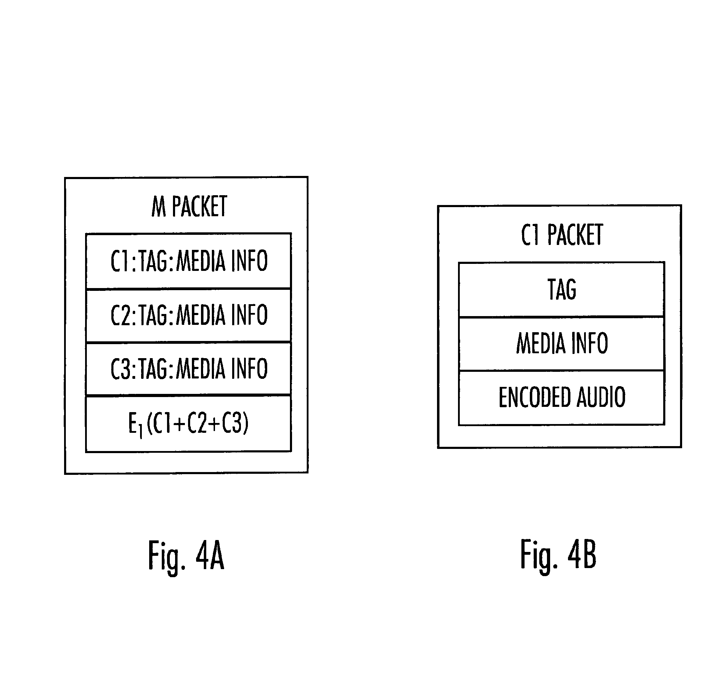

Figure 4B illustrates an exemplary C1 packet according to the various embodiments of an audio multicast system and method. Typically each digital packet generated by endpoint 30 includes the identification tag, encoded audio initiated at the endpoint, and processing or media information that allows server 20 to correctly decode the audio. The tag may include, for example, timestamp information and a unique endpoint identifier. Media information may include, for example, code to indicate how each participant stream has been encoded and can vary depending on, for example, the endpoint's capabilities and transmission link used. The encoded audio is the audio data transmitted from the endpoint.

Figure 4A illustrates an exemplary M packet according to the various embodiments of an audio multicast system and method. Typically each digital packet generated by server 20 includes mixed audio output (shown on Figure 4A as "E1(C1+C2+C3)"). Along with the mixed audio, each M packet includes information to identify whose audio is mixed into the mixed audio, information that the receiving endpoints need to identify the segment of the audio history that is used in the mixed audio, and any additional information to allow the receiving endpoints to process the mixed audio correctly. The media information may further include a selection mechanism used by the server to select a few active participants to participate in the mixed audio. Since different participants may be involved in different segments of the mixed audio, the server can disclose the active participant's information in every segment of the mixed audio. If the server modifies or replaces the source audio used in the mixing process or modifies the mixed audio output, the server discloses such information to the endpoints. The endpoints use this information to modify or replace the stored audio data history so that the participating endpoints can use the correct audio data to properly remove their own audio data from the mixed audio. Since each endpoint may have different tags, server 20 preferably associates the audio of each participating endpoint with its own tag information. For example, if audio from C1, C2, and C3 are used in the mixed audio, server 20 may transmit the illustrative M packet of Figure 4A.

With continued reference to Figure 3, endpoint 30 receives multicast packets from server 20. In the current example, the receiving packet is identified as "Packet M" and is received at data packet extractor 31. The data packet extractor 31 isolates the read tag index from the multicast stream and uses it to access the sample audio portion from history buffer 42. Recall that server 20 included processing information in the multicast stream which would be used by the endpoint. For instance, in accordance with the various embodiments of the system, the encoding adjustment, level of emphasis, and scaling adjustment applied to the signal at the server may be used by the endpoint. This information was transmitted to the endpoint in the multicast and is extracted and forwarded to emphasis compensator 35 and scaler compensator 36 for signal processing.

As previously mentioned, endpoint 30 retains a sample of the composite stream prior to transmission. History buffer 42 saves the data which is later used to support the removal of the endpoint's own audio contribution from the received multicast data. History buffer 42 is preferably capable of holding all the audio samples that are transmitted from endpoint 30 during a particular time period. In one particular embodiment, the time period is one second or about 8000 samples for a standard telephone audio quality sample rate of 8K samples/second using G.711 encoding. As history buffer 42 is written with data, the information is placed into the next available memory location as indicated by a rotating pointer. Once the pointer completes each addressing cycle, the oldest data is overwritten with new updated history bytes.

The samples stored in history buffer 42 are accessed using a tag index, such as the tag associated with the packet by tag generator 41. In one particular embodiment, each tag index is based on a unique timestamp code therefore making each memory storage location uniquely identifiable. The tag on the stored information is compared with the multicast stream tag index and the matching sample, if any, is taken out of the buffer. Media processor 34 uses the media encoding adjustment factor received from server 20 and, in conjunction with emphasis compensator 35, and scaler compensator 36, processes the sample to closely approximate the endpoint's original contribution.

The multicast stream is linearized by audio data linearizer 32. Audio reconstruction 37 receives the two audio streams, i.e., the multicast and the endpoint's historic sample, and subtracts the historic sample from the multicast audio data. In other words, a single stream leaves audio reconstruction 37 that is the multicast stream having the endpoint's originally transmitted audio signal removed. A D/A converter 33 returns the digital signal to analog format suitable for a speaker, earphone or whatever play-back equipment the endpoint employs. By removing the endpoint's past contribution from the mixed multicast, the play-back retains the natural audio of a multiparty conference without the loop feedback problems.

It should be realized that if no match is found in history buffer 42, then the endpoint will not have a history audio sample stream and audio reconstruct 37 will only be presented with one stream, i.e., the multicast stream. With only one input, the audio reconstruct 37 removal function does not occur so the playback is the entire multicast stream. This situation occurs if the endpoint is passive.

In the event of lost or late arriving packets to the server, certain PLC techniques may have been used to synthesize the lost data. Typically, the synthesized audio is different from the original history audio data stored in history buffer 42. Therefore, the endpoint cannot use the stored history audio data to remove its own audio from the mixed audio. The endpoint is provided information on what PLC technique was used at server 20 so the endpoint can synthesize the same audio data used in the mixing process. The synthesized audio can be used in the same methods as previously described to remove the endpoint's contribution from the mixed signal.

Presented herein are various systems, methods and techniques for audio multicast, including the best mode. Having read this disclosure, one skilled in the industry may contemplate other similar techniques, modifications of structure, arrangements, proportions, elements, materials, and components for audio multicast, and particularly in a teleconference, that fall within the scope of the present invention.

## Claims

1. A method for processing audio conferencing between a plurality of endpoints (30) communicating over a packet network (12), the method comprising:
at a server (20);
receiving a plurality of endpoint audio packets (C1) from one or more participating endpoints, each endpoint audio packet comprising an endpoint identifier and an encoded digital audio;
mixing the digital audio from all the received endpoint audio packets to create a mixed audio stream;
generating a composite audio packet (M), each composite audio packet comprising some or all of the mixed audio stream and the endpoint identifier associated with the digital audio in the mixed audio stream;
sending the composite audio packet in a multicast manner to all endpoints irregardless of receipt of audio packets from a particular endpoint;
wherein if the server modifies source audio used in the mixing process or modifies the mixed audio output, the server discloses such information to the endpoints,
at the endpoints;
receiving the composite audio packet from the server;
determining if the mixed audio stream comprises a self-generated digital audio;
and
removing the self-generated digital audio from the mixed audio stream wherein the determining step at the endpoints comprises comparing the endpoint identifier associated with the composite audio packet to one or more stored representations of audio packets previously sent to the server and further wherein the endpoints use the information disclosed by the server to properly remove their own audio data from the mixed audio, wherein the endpoint audio packets are encoded using an encoding scheme and wherein in the event of a change in encoding scheme the change in encoding scheme is transmitted to the server and the server employs the transmitted encoding scheme in decoding the packets.

2. A method according to claim 1, wherein the endpoint retains the encoding scheme in a history buffer for future use by the endpoint.

3. The method of claim 1, wherein the endpoint stores a representation of each audio packet prior to sending the audio packet to the server and each sample includes a timestamp used in the comparing step.

4. The method of claim 1, wherein the removing step at the endpoints comprises a digital subtraction of the self-generated digital audio from the mixed audio stream.

5. A system (10) for processing audio conferencing comprising:
a plurality of conferencing endpoints (30) comprising active and passive participants, the endpoints comprising:
a tag generator to associate an identity to a packet of self-generated audio; and
a storage to retain a plurality of representations of the packets of self-generated audio prior to transmission to a server (20);
the server in packet communication with the conferencing endpoints, the server comprising: a mixer to create a mixed audio stream comprising a compilation of all audio received from the active participants; a packet generator assembling a composite audio packet for multicast transmission to the conferencing endpoints, each composite audio packet comprising some or all of the mixed audio stream and the identity of the endpoints included in the mixed audio stream; and
the conferencing endpoints further comprising: a comparator reading the composite audio packet received from the server and determining if the associated identity matches one of the representations;
upon a match, an audio reconstructor removes the self-generated audio stream of the stored sample from the mixed audio stream; and a configuration to play the mixed audio at the endpoint,
wherein the conferencing endpoint further comprises a compensator receiving an instruction from the server to process the representations in a similar manner as the self-generated audio was processed in the server, wherein the endpoints employ an encoding scheme to encode audio packets and wherein in the event of a change in encoding scheme the endpoint is adapted to transmit the change in encoding scheme to the server and the server is adapted to employs the transmitted encoding scheme in decoding the packets.

6. The system of claim 5, wherein the server further comprises an emphasis selector receiving the audio streams from the active participants and increasing a gain of the most active stream.

7. The system of claim 6, wherein the gain increase is included in the composite audio packet and provided in the instruction to the conferencing endpoints.

8. The system of claim 5, wherein the server further comprises a scaler to adjust the received audio streams from the active participants and prevent data overflow.

9. The system of claim 8, wherein a scaling adjustment is included in the composite audio packet and provided in the instruction to the conferencing endpoints.

10. The system of claim 5, wherein the conferencing endpoints comprise an audio encoder for providing an encoding scheme to the self-generated audio and provide the encoding scheme as an instruction in the packet for transmission to the server.

11. A system according to claim 5, wherein the endpoint retains the encoding scheme in a history buffer for future use by the endpoint.

## Patentansprüche

1. Verfahren zur Verarbeitung von Audiokonferenzen zwischen einer Mehrzahl von Endpunkten (30), die über ein Paketnetzwerk (12) kommunizieren, wobei das Verfahren umfasst:
bei einem Server (20);
Empfangen einer Mehrzahl von Endpunkt-Audiopaketen (C1) von einem oder mehreren teilnehmenden Endpunkten, wobei jedes Endpunkt-Audiopaket eine Endpunktkennung und codiertes digitales Audiomaterial umfasst;
Mischen des digitalen Audiomaterials von aus allen der empfangenen Endpunkt-Audiopakete, um einen gemischten Audiostrom zu erzeugen;
Erzeugen eines zusammengesetzten Audiopakets (M), wobei jedes zusammengesetzte Audiopaket einige oder alle der gemischten Audioströme und die zum digitalen Audiomaterial in dem gemischten Audiostrom dazugehörige Endpunktkennung umfasst;
Senden des zusammengesetzten Audiopakets in einer Multicastweise an alle Endpunkte, ungeachtet vom Empfang der Audiopakete bei einem bestimmten Endpunkt;
wobei, wenn der Server in dem Mischverfahren verwendetes Quell-Audiomaterial modifiziert oder die gemischte Audioausgabe modifiziert, der Server den Endpunkten eine solche Information offenbart,
bei den Endpunkten;
Empfangen des zusammengesetzten Audiopakets von dem Server;
Bestimmen, ob der gemischte Audiostrom ein selbsterzeugtes digitales Audiomaterial umfasst; und
Entfernen des selbsterzeugten digitalen Audiomaterials aus dem gemischten Audiostrom, wobei der Bestimmungsschritt bei den Endpunkten Vergleichen der zum zusammengesetzten Audiopaket dazugehörigen Endpunktkennung mit einer oder mehreren gespeicherten Verkörperungen von vorher an den Server gesendeten Audiopaketen umfasst, und wobei die Endpunkte ferner die durch den Server offenbarte Information verwenden, um ihre eigenen Audiodaten aus dem gemischten Audiomaterial richtig zu entfernen, wobei die Endpunkt-Audiopakete mittels eines Codierungsschemas codiert werden und wobei im Falle einer Änderung in dem Codierungsschema die Änderung in dem Codierungsschema an den Server übertragen wird und der Server das übertragene Codierungsschema beim Decodieren der Pakete einsetzt.

2. Verfahren nach Anspruch 1, wobei der Endpunkt das Codierungsschema in einem Verlaufspuffer zur zukünftigen Verwendung durch den Endpunkt aufbewahrt.

3. Verfahren nach Anspruch 1, wobei der Endpunkt eine Verkörperung von jedem Audiopaket vor dem Senden des Audiopakets an den Server speichert und wobei jedes Sample einen in dem Vergleichsschritt verwendeten Zeitstempel enthält.

4. Verfahren nach Anspruch 1, wobei der Entfernungsschritt bei den Endpunkten eine digitale Subtraktion des selbsterzeugten digitalen Audiomaterials aus dem gemischten Audiostrom umfasst.

5. System (10) zum Verarbeiten einer Audiokonferenz umfassend:
eine Mehrzahl von Konferenzendpunkten (30), die aktive und passive Teilnehmer umfasst, wobei die Endpunkte umfassen:
einen Tag-Erzeuger, um eine Kennung zu einem Paket von selbsterzeugtem Audiomaterial zuzuordnen; und
einen Speicher, um eine Mehrzahl von Verkörperungen der Pakete von selbsterzeugtem Audiomaterial vor der Übertragung an einen Server (20) aufzubewahren;
den Server in Paketkommunikation mit den Konferenzendpunkten, wobei der Server umfasst: einen Mischer, um einen gemischten Audiostrom zu erzeugen, der eine Zusammenstellung von all dem von den aktiven Teilnehmern empfangenen Audiomaterial umfasst; einen Paketerzeuger, der ein zusammengesetztes Audiopaket zur Multicastübertragung an die Konferenzendpunkte zusammensetzt, wobei jedes zusammengesetzte Audiopaket einige oder alle von den gemischten Audioströmen und die im Audiostrom enthaltene Kennung von den Endpunkten umfasst; und
wobei die Konferenzendpunkte ferner umfassen: einen Vergleicher, der das von dem Server empfangene zusammengesetzte Audiopaket liest und bestimmt, ob die dazugehörige Kennung mit einer von den Verkörperungen übereinstimmt;
wobei ein Audio-Rekonstruktor bei einer Übereinstimmung den selbsterzeugten Audiostrom des gespeicherten Samples aus dem gemischten Audiostrom entfernt; und eine Konfiguration, um das gemischte Audiomaterial an dem Endpunkt wiederzugeben,
wobei der Konferenzendpunkt ferner einen Kompensierer umfasst, der eine Anweisung von dem Server empfängt, um die Verkörperungen in einer ähnlichen Weise, wie das selbsterzeugte Audiomaterial in dem Server verarbeitet wurde, zu verarbeiten, wobei die Endpunkte ein Codierungsschema einsetzen, um Audiopakete zu codieren, und wobei im Falle einer Änderung im Codierungsschema der Endpunkt dazu ausgelegt ist, die Änderung im Codierungsschema an den Server zu übertragen, und der Server dazu ausgelegt ist, das übertragene Codierungsschema beim Decodieren der Pakete einzusetzen.

6. System nach Anspruch 5, wobei der Server ferner eine Gewichtungsauswahleinrichtung umfasst, welche die Audioströme von den aktiven Teilnehmern empfängt und eine Verstärkung der aktivsten Ströme erhöht.

7. System nach Anspruch 6, wobei die Verstärkungserhöhung in dem zusammengesetzten Audiopaket enthalten und in der Anweisung an die Konferenzendpunkte bereitgestellt ist.

8. System nach Anspruch 5, wobei der Server ferner eine Skaliereinrichtung umfasst, welche die empfangenen Audioströme von den aktiven Teilnehmern justiert und einen Datenüberlauf verhindert.

9. System nach Anspruch 8, wobei eine Skalierungsjustierung in dem zusammengesetzten Audiopaket enthalten und in der Anweisung an die Konferenzendpunkte bereitgestellt ist.

10. System nach Anspruch 5, wobei die Konferenzendpunkte einen Audiocodierer zum Bereitstellen eines Codierungsschemas zu dem selbsterzeugten Audiomaterial umfassen und das Codierungsschema als eine Anweisung in dem Paket zur Übertragung an den Server bereitstellen.

11. System nach Anspruch 5, wobei der Endpunkt das Codierungsschema in einem Verlaufspuffer zur zukünftigen Verwendung durch den Endpunkt aufbewahrt.

## Revendications

1. Procédé de traitement d'une audioconférence entre une pluralité de points d'extrémité (30) qui communiquent sur un réseau à commutation de paquets (12), le procédé comprenant les étapes consistant à :
au niveau d'un serveur (20) ;
recevoir une pluralité de paquets audio de point d'extrémité (C1) en provenance d'un ou de plusieurs points d'extrémité participants, chaque paquet audio de point d'extrémité comprenant un identificateur de point d'extrémité et de l'audio numérique codée ;
mélanger l'audio numérique en provenance de tous les paquets audio de point d'extrémité reçus de manière à créer un flux audio mélangé ;
générer un paquet audio composite (M), chaque paquet audio composite comprenant une partie ou la totalité du flux audio mélangé et l'identificateur de point d'extrémité associé à l'audio numérique dans le flux audio mélangé ;
envoyer le paquet audio composite me manière multidiffusée à tous les points d'extrémité indépendamment de la réception de paquets audio en provenance d'un point d'extrémité particulier ;
dans lequel, si le serveur modifie la source audio utilisée dans le procédé de mélange ou modifie la sortie audio mélangée, le serveur divulgue de telles informations aux points d'extrémité,
au niveau des points d'extrémité ;
recevoir le paquet audio composite en provenance du serveur ;
déterminer si le flux audio mélangé comprend de l'audio numérique auto-générée ; et
retirer l'audio numérique auto-générée du flux audio mélangé dans lequel l'étape de détermination au niveau des points d'extrémité comprend une étape consistant à comparer l'identificateur de point d'extrémité associé au paquet audio composite à une ou plusieurs représentations stockées de paquets audio envoyés précédemment au serveur et dans lequel en outre les points d'extrémité utilisent les informations divulguées par le serveur de manière à retirer correctement leurs propres données audio de l'audio mélangée, dans lequel les paquets audio de point d'extrémité sont codés en utilisant un système de codage et dans lequel, dans le cas d'une modification du système de codage, la modification du système de codage est transmise au serveur et le serveur utilise le système de codage transmis lors du décodage des paquets.

2. Procédé selon la revendication 1, dans lequel le point d'extrémité retient le système de codage dans une mémoire tampon d'historique pour une utilisation ultérieure par le point d'extrémité.

3. Procédé selon la revendication 1, dans lequel le point d'extrémité stocke une représentation de chaque paquet audio avant d'envoyer le paquet audio au serveur et chaque échantillon comprend une estampille temporelle utilisé dans l'étape de comparaison.

4. Procédé selon la revendication 1, dans lequel l'étape de retrait au niveau des points d'extrémité comprend une soustraction numérique de l'audio numérique auto-générée du flux audio mélangé.

5. Système (10) de traitement d'une audioconférence comprenant :
une pluralité de points d'extrémité de conférence (30) comprenant des participants actifs et passifs, les points d'extrémité comprenant :
un générateur d'étiquette destiné à associer une identité à un paquet d'audio auto-générée ; et
un stockage destiné à retenir une pluralité de représentations des paquets d'audio auto-générée avant une transmission à un serveur (20) ;
le serveur en communication par paquets avec les points d'extrémité de conférence, le serveur comprenant : un mélangeur destiné à créer un flux audio mélangé comprenant une compilation de toute l'audio reçue en provenance des participants actifs ; un générateur de paquet qui assemble un paquet audio composite pour une transmission de diffusion groupée vers les points d'extrémité de conférence, chaque paquet audio composite comprenant une partie ou la totalité du flux audio mélangé et l'identité des points d'extrémité inclus dans le flux audio mélangé ; et
les points d'extrémité de conférence comprenant en outre : un comparateur qui lit le paquet audio composite reçu en provenance du serveur et détermine si l'identité associée correspond à l'une des représentations ;
lors d'une correspondance, un dispositif de reconstruction audio retire le flux d'audio auto-générée de l'échantillon stocké du flux audio mélangé ; et une configuration destinée à lire l'audio mélangée au niveau du point d'extrémité ;
dans lequel le point d'extrémité de conférence comprend en outre un dispositif de compensation qui reçoit une instruction en provenance du serveur de traiter les représentations d'une façon similaire à celle dont l'audio auto-générée a été traitée dans le serveur, dans lequel les points d'extrémité utilisent un système de codage de façon à coder les paquets audio et dans lequel, dans le cas d'une modification du système de codage, le point d'extrémité est adapté pour transmettre la modification du système de codage au serveur et le serveur est adapté pour utiliser le système de codage transmis lors du décodage des paquets.

6. Système selon la revendication 5, dans lequel le serveur comprend en outre un dispositif de sélection d'accentuation qui reçoit les flux audio en provenance des participants actifs et accroît le gain du flux le plus actif.

7. Système selon la revendication 6, dans lequel l'accroissement de gain est inclus dans le paquet audio composite et fourni dans l'instruction aux points d'extrémité de conférence.

8. Système selon la revendication 5, dans lequel le serveur comprend en outre un dispositif de mise à l'échelle pour régler les flux audio reçus en provenance des participants actifs et pour empêcher un débordement de données.

9. Système selon la revendication 8, dans lequel un réglage de mise à l'échelle est inclus dans le paquet audio composite et fourni dans l'instruction aux points d'extrémité de conférence.

10. Système selon la revendication 5, dans lequel les points d'extrémité de conférence comprennent un codeur audio destiné à fournir un système de codage à l'audio auto-générée et à fournir le système de codage comme une instruction dans le paquet pour une transmission vers le serveur.

11. Système selon la revendication 5, dans lequel le point d'extrémité retient le système de codage dans une mémoire tampon d'historique pour une utilisation ultérieure par le point d'extrémité.
